# FASCICULE DE BREVET EUROPEEN

(11) **EP 2 053 311 B1**
(45) Date de publication et mention de la délivrance du brevet: **06.04.2016**
(21) Numéro de dépôt: 08167047.3
(22) Date de dépôt: 20.10.2008
(51) Int. Cl.: F23R 3/06

(54) **Parois de chambre de combustion à dilution et refroidissement optimisés, chambre de combustion et turbomachine en étant munies**
Wände einer Brennkammer mit optimierter Verdünnung und Abkühlung, damit ausgerüstete Brennkammer und Turbomaschine
Combustion chamber walls with optimised dilution and cooling, combustion chamber and turbomachine equipped with same

(30) Priorité: 22.10.2007 FR 0707360
(43) Date de publication de la demande: 29.04.2009
(73) Titulaire: SNECMA, 75015 Paris (FR)
(72) Inventeur: Cazalens, Michel, Pierre, 77780 Bourron Marlotte (FR); Commaret, Patrice, André, 77950 Rubelles (FR); Lunel, Romain, Nicolas, 77950 Montereau sur Le Jard (FR)
(74) Mandataire: Gevers & Orès

(56) Documents cités:
- EP-A- 1 096 205
- EP-A- 1 231 435
- EP-A- 1 281 916
- GB-A- 1 499 950

## Description

L'invention se rapporte au domaine des turbomachines et concerne une chambre de combustion pour laquelle l'alimentation en air de dilution ainsi qu'en air de refroidissement est optimisée.

L'invention porte plus particulièrement sur une optimisation de la position des trous de dilution présents sur les parois de la chambre de combustion.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir l'énergie nécessaire, par exemple, à la motorisation d'un avion.

Typiquement, une chambre de combustion utilisée en aéronautique comprend une paroi interne et une paroi externe, reliées entre elles à leur extrémité amont par un fond de chambre. Le fond de chambre présente, espacées circonférentiellement, une pluralité d'ouvertures recevant chacune un dispositif d'injection qui permet l'amenée du mélange d'air et de carburant dans la chambre.

La chambre de combustion est alimentée par du carburant liquide, mélangé à de l'air issu d'un compresseur. Le carburant liquide est amené jusqu'à la chambre par des injecteurs dans lesquels le carburant est vaporisé en fines gouttelettes. Ce carburant est ensuite brûlé au sein de la chambre de combustion, ce qui permet d'élever la température de l'air issu du compresseur.

De façon générale, une chambre de combustion doit répondre à plusieurs impératifs et est dimensionnée en conséquence. Elle doit tout d'abord permettre d'utiliser le carburant de façon optimale, c'est à dire atteindre des rendements de combustion les plus élevés possibles. Elle doit de plus fournir à la turbine des gaz chauds, dont la répartition de température en sortie de chambre doit être d'une part compatible avec la fiabilité demandée et, d'autre part la plus uniforme possible. Elle doit par ailleurs dégrader le moins possible l'énergie de l'écoulement, et donc générer une perte de pression entre son entrée et sa sortie minimale. Les pièces constitutives de la chambre de combustion doivent enfin avoir une bonne tenue mécanique, ce qui nécessite de diminuer la température des parois de la chambre.

A l'intérieur de la chambre, la combustion s'effectue en deux phases principales, auxquelles correspondent physiquement deux zones. Dans une première zone, encore appelée zone primaire, le mélange air/carburant est dans les proportions stoechiométriques ou proche de ces proportions. Pour réaliser le mélange air/carburant, l'air est injecté à la fois au niveau des injecteurs, du fond de chambre ainsi qu'à travers les parois de la chambre par une première rangée d'orifices appelés trous primaires. Avoir dans la zone primaire un mélange dans les conditions ou proche des conditions stoechiométriques permet d'obtenir un bon rendement de combustion avec une vitesse de réaction maximale. On appelle vitesse de réaction la vitesse de disparition d'un des constituants du mélange air/carburant. Par ailleurs, pour que la combustion soit complète, le mélange air/carburant doit séjourner suffisamment longtemps dans cette zone primaire. La température atteinte par les gaz issus de la combustion dans la zone primaire est très élevée. Elle peut atteindre par exemple 2000°C, température incompatible avec la bonne tenue mécanique des matériaux de la turbine et de la chambre. Il est donc nécessaire de refroidir ces gaz, ce qui est réalisé dans une seconde zone. Généralement, la zone primaire représente environ le premier tiers de la longueur de la chambre.

Dans la seconde zone, encore appelée zone de dilution, de l'air frais, appelé air de dilution, issu du compresseur, est injecté dans la chambre à travers ses parois grâce à des orifices appelés trous de dilution. L'air de dilution permet de refroidir les gaz issus de la combustion ainsi que les parois de la chambre. L'air de dilution, en refroidissant les gaz, permet de plus d'arrêter la réaction chimique de combustion.

Les températures élevées atteintes par les gaz au cours de la combustion nécessitent de refroidir de façon spécifique les parois de la chambre. Différentes technologies de refroidissement existent, telles que la convection forcée où le refroidissement est assuré par la circulation d'air issu du compresseur autour de la chambre, ou encore le refroidissement par film d'air où l'on interpose entre les parois de la chambre et les gaz un film d'air frais issu du compresseur. Une autre technique de refroidissement est la multiperforation. Cette technique consiste à réaliser, sur tout ou partie des parois de la chambre, une multitude d'orifices de très petit diamètre, en général de l'ordre de 0,6mm environ. L'air frais circulant autour de la chambre pénètre dans celle-ci par ces orifices. Les parois sont alors refroidies à la fois par convection à l'intérieur des orifices et par film puisque cet air vient ensuite lécher la face interne des parois. Cette technologie présente l'avantage de pouvoir agir de façon locale sur les points chauds éventuels pouvant exister sur les parois de la chambre.

Ainsi, lorsqu'il est nécessaire de refroidir une zone spécifique des parois de la chambre, il est connu d'aménager localement la multiperforation, par exemple en augmentant la densité d'orifices.

L'ensemble des trous primaires d'une part, et l'ensemble des trous de dilution d'autre part, sont disposés respectivement à la même position axiale par rapport au fond de chambre, les trous de dilution étant situés en aval des trous primaires. Les positions axiales des trous primaires et des trous de dilution, et en particulier la distance selon la direction axiale entre les trous primaires et de dilution, ainsi que leurs répartitions sur la circonférence des parois de la chambre, constituent des paramètres importants sur lesquels le concepteur joue pour modifier la répartition de température en sortie de la chambre et pour diminuer les émissions polluantes.

Le positionnement relatif des trous de dilution et des orifices de multiperforation a un impact direct sur le refroidissement des zones des parois de la chambre situées directement en aval des trous de dilution.

Pour certaines chambres, les trous de dilution ne sont pas tous du même diamètre afin d'améliorer la répartition de température en sortie de la chambre. Dans ce cas, si le refroidissement des parois de la chambre est réalisé grâce à des orifices de multiperforation, la distance entre ces orifices et les trous de dilution de petit diamètre est supérieure à la distance entre les orifices de multiperforation et les trous de dilution de grand diamètre. Ceci peut être à l'origine de points chauds sur les parois de la chambre, néfastes pour la tenue mécanique et la durée de vie des parois. Ces points chauds n'apparaissent pas lorsque la chambre est refroidie par un film d'air longeant le côté interne de ses parois

L'objectif de l'invention est de proposer une solution simple, facilement réalisable, permettant, dans le cas où les parois de la chambre sont refroidies par multiperforation, d'éviter l'apparition d'éventuels points chauds, sans augmenter les émissions polluantes ni avoir d'impact négatif sur la répartition de température en sortie de la chambre.

L'invention permet de résoudre ce problème en proposant une nouvelle définition de la position des trous de dilution sur les parois de la chambre.

On connaît EP 1281916 et EP 1231435 portant sur une chambre de combustion dont la paroi est refroidie par des lames d'air axiales formées par des orifices ménagés dans des portions de transition reliant deux éléments de paroi de diamètre croissant. Deux séries de trous de dilution avec deux diamètres différents sont disposés selon EP 1231435 aussi près que possible des orifices de la zone de transition.

Plus particulièrement, l'invention concerne une paroi de chambre de combustion de turbomachine telle que caractérisée par la revendication 1.

De façon préférentielle, les trous de dilution ayant le plus petit diamètre sont alignés axialement avec les trous primaires.

L'invention concerne par ailleurs une chambre de combustion ainsi qu'une turbomachine munie d'au moins une telle paroi.

L'invention sera mieux comprise et d'autres avantages de celle-ci apparaîtront plus clairement à la lumière de la description d'un mode préféré de réalisation et de variantes, donnée à titre d'exemple non limitatif et faite en référence aux dessins annexés, dans lesquels :
- la figure 1 est une vue schématique partielle en coupe d'une turbomachine et plus précisément d'un turboréacteur d'avion ;
- la figure 2 est une vue schématique en coupe d'une chambre de combustion selon l'art antérieur ;
- la figure 3 est une vue de dessus d'un secteur angulaire de la paroi externe d'une chambre de combustion selon l'art antérieur,
- la figure 4 est une vue de détail du secteur angulaire de la figure 3,
- la figure 5 est une vue de dessus d'un secteur angulaire de la paroi externe d'une chambre de combustion selon l'invention,
- la figure 6 est une vue de détail du secteur angulaire de la figure 5.

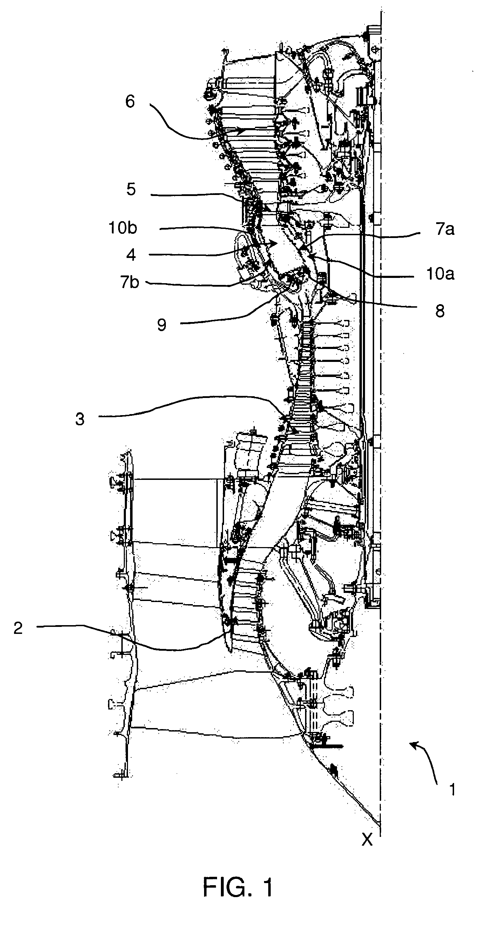

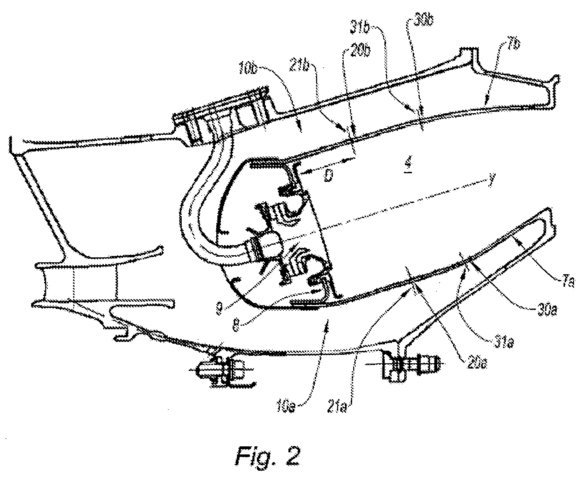

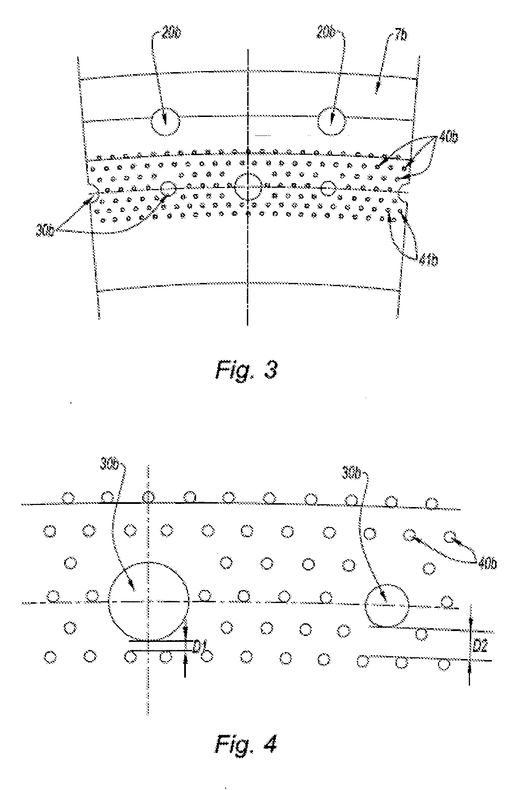

La figure 1 montre en coupe une vue d'ensemble d'une turbomachine 1, par exemple un turboréacteur d'avion, dont l'axe de rotation est repéré X. La turbomachine 1 comprend un compresseur basse pression 2, un compresseur haute pression 3, une chambre de combustion 4, une turbine haute pression 5 et une turbine basse pression 6. La chambre de combustion 4 est du type annulaire et est délimitée par une paroi interne 7a annulaire et une paroi externe 7b annulaire espacées radialement par rapport à l'axe X, et reliées à leur extrémité amont à un fond de chambre annulaire 8. Le fond de chambre 8 comporte une pluralité d'ouvertures, régulièrement espacées circonférentiellement. Dans chacune de ces ouvertures est monté un dispositif d'injection 9. Les gaz de combustion s'écoulent vers l'aval dans la chambre de combustion 4 et alimentent ensuite les turbines 5 et 6 qui entraînent respectivement les compresseurs 3 et 2 disposés en amont du fond de chambre 8, par l'intermédiaire respectivement de deux arbres. Le compresseur haute pression 3 alimente en air les dispositifs d'injection 9, ainsi que deux espaces annulaires 10a et 10b disposés radialement respectivement à l'intérieur et à l'extérieur de la chambre de combustion 4. L'air introduit dans la chambre de combustion 4 participe à la vaporisation du carburant et à sa combustion. L'air circulant à l'extérieur des parois de la chambre de combustion 4 participe, d'une part, à la combustion et, d'autre part, au refroidissement des parois 7a et 7b et des gaz issus de la combustion. Pour cela, l'air pénètre dans la chambre respectivement par une première rangée d'orifices appelés trous primaires et par une seconde série d'orifices appelés trous de dilution, ainsi que par des orifices de multiperforation ménagés sur les parois interne 7a et externe 7b. Ces différents orifices sont représentés aux figures 2 et 3.

La figure 2 montre de façon plus précise une coupe d'une chambre de combustion 4 selon l'art antérieur.

Les parois interne 7a et externe 7b de la chambre 4 sont munies toutes deux d'une rangée de trous primaires 20a, respectivement 20b dont les axes sont repérés 21 a, respectivement 21 b. En aval de ces trous primaires 20a, 20b est disposée une rangée de trous de dilution 30a, 30b, dont les axes sont repérés 31 a, respectivement 31 b. Sur la paroi interne 7a, tous les trous primaires 20a sont situés à la même distance D du fond de chambre 8. Il en va de même pour les trous de dilution 30a, ainsi que pour les trous primaires 20b et de dilution 30b sur la paroi externe 7b.

La figure 3 montre une vue de dessus d'un secteur angulaire de la paroi externe 7b de la chambre de combustion 4 selon l'art antérieur. Sur ce secteur, on distingue deux des trous primaires 20b, ainsi que plusieurs trous de dilution 30b. Tous les trous primaires ont le même diamètre tandis que les trous de dilution peuvent, comme illustré ici, avoir des diamètres différents. Les trous primaires 20b sont répartis de façon régulière sur la circonférence de la paroi externe 7b. Les trous de dilution sont eux aussi répartis de façon régulière sur la circonférence de la paroi externe 7b. Pour chaque trou primaire 20b, un trou de dilution 30b est disposé à la même position angulaire, c'est à dire que, selon l'axe Y de la chambre, chaque trou primaire est aligné avec un trou de dilution 30b. Dans le cas représenté à la figure 3, les trous de dilution 30b dont le diamètre est le plus petit sont alignés avec les trous primaires 20b. Les autres trous de dilution, à savoir ceux qui ont le plus grand diamètre, sont intercalés entre les trous de dilution de petit diamètre et disposés à équidistance de ces derniers. Les trous de dilution de grand diamètre sont également situés à équidistance des trous primaires 20b les plus proches. Dans l'exemple représenté, il n'y a qu'un seul trou de dilution de petit diamètre situé angulairement entre deux trous de dilution de grand diamètre consécutifs, mais il pourrait y en avoir plusieurs, répartis de façon régulière sur la circonférence de la paroi externe 7b.

Afin de refroidir la paroi 7b, des orifices de multiperforation 40b sont ménagés sur toute sa circonférence. Les orifices de multiperforation 40b sont en général tous du même diamètre, mais ils pourraient être de diamètres différents, par exemple en fonction des zones à refroidir. Dans l'exemple illustré ici, ils sont répartis de façon régulière et forment des rangées successives d'orifices disposés à la même position axiale. Des aménagements locaux tels qu'une augmentation du nombre d'orifices pourrait être envisagés. Le positionnement de la première rangée 41 b d'orifices de multiperforation 40b située immédiatement en aval des trous de dilution 30b est important car il a un impact direct sur la température atteinte par la paroi 7b dans cette zone.

La figure 4 représente une vue de détail du secteur angulaire de la figure 3 où sont représentés les trous de dilution 30b ainsi que les orifices de multiperforation 40b. Sur cette vue, il apparaît que, compte tenu de la différence de diamètre entre les trous de dilution 30b, la distance selon l'axe Y de la chambre entre un trou de dilution de grand diamètre et la première rangée d'orifices de multiperforation 41 b, repérée D1, est inférieure à la distance axiale entre un trou de dilution de petit diamètre et la même rangée d'orifices de multiperforation, repérée D2. Cette disposition peut entraîner, en aval des trous de dilution de petit diamètre des points chauds néfastes pour la tenue mécanique de la paroi 7b et donc pour sa durée de vie.

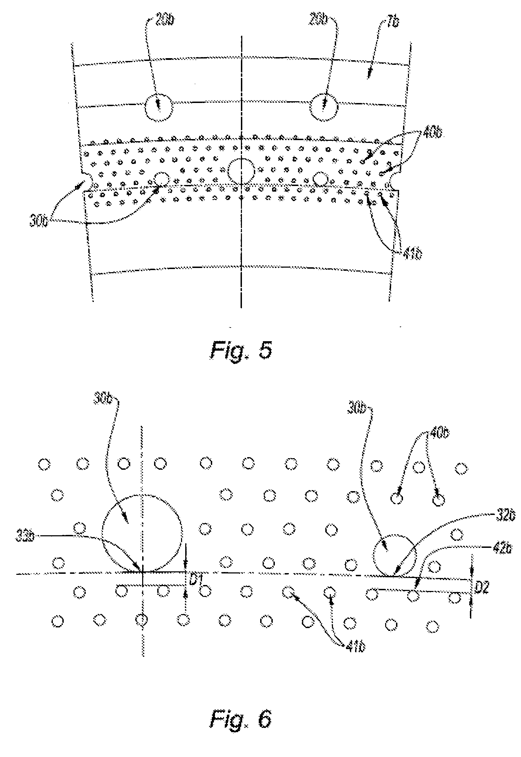

La figure 5, montre une vue de dessus d'un secteur angulaire de la paroi externe 7b d'une chambre de combustion 4 selon l'invention et la figure 6 montre un agrandissement de ce secteur. Sur ce secteur, on distingue deux des trous primaires 20b, ainsi que plusieurs trous de dilution 30b. La position des trous primaires 20b reste inchangée par rapport à l'art antérieur, seul le positionnement des trous de dilution 30b change. Les trous de dilution 30b sont répartis régulièrement sur la circonférence de la paroi externe 7b et sont de diamètres différents. Dans notre exemple, on distingue des trous de dilution 30b à petit et grand diamètre. Les trous de dilution de petit diamètre sont disposés de façon à être alignés avec les trous primaires 20b, c'est à dire qu'ils sont à la même position angulaire. Le trous de dilution de grand diamètre sont disposés entre les trous primaires 20b, à équidistance des trous de dilution de petit diamètre les plus proches. Des orifices de multiperforation 40b sont ménagés sur toute la circonférence de la paroi 7b. Les orifices de multiperforation 40b sont en général tous du même diamètre, mais ils pourraient être de diamètres différents. Leur diamètre est bien inférieur au diamètre de trous de dilution et est généralement de l'ordre de 0,6 mm environ. Ils sont répartis de façon régulière et forment selon la direction axiale une succession de rangées d'orifices. Contrairement à l'art antérieur, l'ensemble des trous de dilution n'est plus situé à la même distance axiale des trous primaires 20b. Les trous de dilution de petit diamètre sont décalés vers l'aval de la paroi 7b, et sont ainsi plus proches de la première rangée d'orifices de multiperforation 41 b située immédiatement en aval des trous de dilution 30b. Ainsi, la zone de la paroi 7b située entre les trous de dilution de petit diamètre et cette première rangée d'orifices de multiperforation 41 b est mieux refroidie, ce qui permet d'éviter les points chauds éventuels.

Afin de ne pas perturber la combustion, le décalage axial vers l'aval des trous de dilution de petit diamètre ne doit pas être trop important. Plus précisément, la distance axiale D2, entre le bord aval 32b des trous de dilution de petit diamètre et la bord amont 42b des orifices de multiperforation de la première rangée 41 b, ne doit pas être inférieure à la distance axiale D1, entre le bord aval 33b des trous de dilution de grand diamètre et le bord amont des orifices de multiperforation de la première rangée 41b. Par ailleurs, de façon à garantir un bon refroidissement de la paroi 7b immédiatement en aval des trous de dilution, D2 doit être inférieure ou égale au double du diamètre des orifices de multiperforation de la première rangée 41 b.

Une telle disposition permet d'éviter les points chauds qui pouvaient exister en aval des trous de dilution sans modifier les caractéristiques de la combustion, et notamment sans diminuer le rendement de combustion ni augmenter les émissions polluantes et sans modifier la répartition de température en sortie de la chambre de combustion.

La description ci-dessus a été donnée en prenant comme exemple d'application la paroi externe 7b mais l'invention s'applique tout aussi bien et de la même façon à la paroi interne 7a.

## Revendications

1. Paroi de chambre de combustion de turbomachine comprenant au moins une rangée circonférentielle de trous primaires (20b), au moins une rangée circonférentielle de trous de dilution (30b), des orifices de multiperforation (40b), les trous primaires (20b) étant tous situés à une même position axiale, les trous primaires (20b) et les trous de dilution (30b) étant répartis régulièrement sur la circonférence de la paroi (7b), les trous de dilution (30b) se répartissant en au moins deux groupes distincts en fonction de la valeur de leur diamètre, une partie des trous de dilution ayant le plus grand diamètre, une autre partie de trous de dilution ayant le plus petit diamètre, les orifices de multiperforation ayant des diamètres inférieurs au plus petit diamètre des trous de dilution,
les trous de dilution ayant le plus grand diamètre et les trous de dilution ayant le plus petit diamètre étant munis d'un bord aval (33b, 32b) et les orifices de multiperforation (40b) étant munis d'un bord amont (42b), **caractérisée en ce que**
les trous de dilution ayant le plus petit diamètre sont décalés axialement vers l'aval par rapport aux trous de dilution ayant le plus grand diamètre, le bord aval (32b) des trous de dilution de petit diamètre étant aligné circonférentiellement avec le bord aval (33b) des trous de dilution ayant le plus grand diamètre,
les orifices de multiperforation situés immédiatement en aval des trous de dilution (30b) formant une première rangée circonférentielle (41b) d'orifices situés à la même distance axiale,
le bord aval (32b) des trous de dilution ayant le plus petit diamètre et le bord amont (42b) des orifices de multiperforation de la première rangée circonférentielle (41b) étant distants axialement d'une valeur D2,
D2 étant inférieure ou égale au double du diamètre des orifices de multiperforation de la première rangée (41b).

2. Paroi de chambre de combustion selon la revendication précédente, **caractérisée en ce que**
les trous de dilution (30b) ayant le plus petit diamètre sont alignés axialement avec les trous primaires (20b).

3. Chambre de combustion de turbomachine comportant au moins une paroi selon l'une des revendications précédentes.

4. Turbomachine munie d'une chambre de combustion selon la revendication précédente.

## Patentansprüche

1. Wand der Brennkammer einer Turbomaschine, die mindestens eine umlaufende Reihe primärer Löcher (20b), mindestens eine umlaufende Reihe von Verdünnungslöchern (30b), Multiperforations-Öffnungen (40b) enthält, wobei die primären Löcher (20b) sich alle in derselben axialen Position befinden, wobei die primären Löcher (20b) und die Verdünnungslöcher (30b) regelmäßig über den Umfang der Wand (7b) verteilt sind, wobei sich die Verdünnungslöcher (30b) in mindestens zwei unterschiedliche Gruppen entsprechend der Größe ihres Durchmessers verteilen, wobei ein Teil der Verdünnungslöcher den größeren, ein anderer Teil den kleineren Durchmesser hat, wobei die Multiperforations-Öffnungen einen noch kleineren Durchmesser haben als die kleinsten Durchmesser der Verdünnungslöcher,
wobei die Verdünnungslöcher mit dem größeren Durchmesser und die Verdünnungslöcher mit dem kleineren Durchmesser eine nachgeschaltete Kante (33b, 32b) aufweisen und die Multiperforations-Löcher (40b) eine vorgeschaltete Kante (42b) aufweisen,
**dadurch gekennzeichnet, dass** die Verdünnungslöcher mit dem kleineren Durchmesser axial in nachgeschalteter Richtung zu den Verdünnungslöchern mit dem größeren Durchmesser versetzt sind, wobei die nachgeschaltete Kante (32b) der Verdünnungslöcher mit dem kleineren Durchmesser zur nachgeschalteten Kante (33b) der Verdünnungslöcher mit dem größeren Durchmesser umlaufend ausgerichtet ist,
wobei die Multiperforations-Öffnungen, die sich direkt nachgeschaltet zu den Verdünnungslöcher (30b) befinden, eine erste umlaufende Reihe (41b) von Öffnungen, die den gleichen Achsabstand haben, bilden,
wobei die nachgeschaltete Kante (32b) der Verdünnungslöcher mit kleinerem Durchmesser und die vorgeschaltete Kante (42b) der Multiperforations-Öffnungen der ersten umlaufenden Reihe (41b) in einer axialen Distanz D2 voneinander liegen, wobei D2 kleiner oder gleich dem doppelten Durchmesser der Multiperforations-Öffnungen der ersten Reihe (41b) ist.

2. Wand einer Brennkammer gemäß dem vorhergehenden Anspruch, **dadurch gekennzeichnet, dass** die Verdünnungslöcher (30b), die den kleineren Durchmesser haben, axial zu den primären Löchern (20b) ausgerichtet sind.

3. Brennkammer einer Turbomaschine, die gemäß einer der vorhergehenden Ansprüche mindestens eine Wand enthält.

4. Turbomaschine, die gemäß dem vorhergehenden Anspruch mit einer Brennkammer versehen ist.

## Claims

1. Turbomachine combustion chamber wall comprising at least one circumferential row of primary holes (20b), at least one circumferential row of dilution holes (30b), and multiperforation orifices (40b), the primary holes (20b) all being situated at the same axial position, the primary holes (20b) and the dilution holes (30b) being uniformly distributed over the circumference of the wall (7b), the dilution holes (30b) being divided into at least two separate groups according to the value of their diameter, one fraction of the dilution holes having the largest diameter, another fraction of dilution holes having the smallest diameter, the multiperforation orifices having diameters which are less than the smallest diameter of the dilution holes, the dilution holes having the largest diameter and the dilution holes having the smallest diameter being provided with a downstream edge (33b, 32b) and the multiperforation orifices (40b) being provided with an upstream edge (42b), **characterized in that** the dilution holes having the smallest diameter are offset axially downstream with respect to the dilution holes having the largest diameter, the downstream edge (32b) of the small-diameter dilution holes being circumferentially aligned with the downstream edge (33b) of the dilution holes having the largest diameter, the multiperforation orifices situated immediately downstream of the dilution holes (30b) forming a first circumferential row (41b) of orifices situated at the same axial distance, and the downstream edge (32b) of the dilution holes having the smallest diameter and the upstream edge (42b) of the multiperforation orifices of the first circumferential row (41b) being axially distant by a value D2, D2 being less than or equal to double the diameter of the multiperforation orifices of the first row (41b.

2. Combustion chamber wall according to the preceding claim, wherein the dilution holes (30b) having the smallest diameter are axially aligned with the primary holes (20b).

3. Turbomachine combustion chamber comprising at least one wall according to one of the preceding claims.

4. Turbomachine provided with a combustion chamber according to the preceding claim.
